# EUROPEAN PATENT SPECIFICATION

(11) **EP 0 622 009 B1**
(45) Date of publication and mention of the grant of the patent: **13.10.1999**
(21) Application number: 94201496.0
(22) Date of filing: 19.04.1989
(51) Int. Cl.: A01D 43/10

(54) **A mowing machine**
Mähmaschine
Machine de fauchage

(30) Priority: 21.04.1988 NL 8801039
(43) Date of publication of application: 02.11.1994
(62) Divisional of application: 89201003.4
(73) Proprietor: MAASLAND N.V., 3155 PD Maasland (NL)
(72) Inventor: Koorn, Maarten, NL-3123 CP Schiedam (NL)
(74) Representative: Corten, Maurice Jean F.M.

(56) References cited:
- EP-A- 0 068 560
- EP-A- 0 118 952
- EP-A- 0 177 091
- WO-A-81/02966
- FR-A- 2 171 674

## Description

The present invention relates to a mower-crusher as described in the preamble of claim 1.

A mower-crusher of the above-defined type is from document EP-A-0 056 804.

In this known construction the crusher device is connected via horizontally arranged resilient strips with the frame of the mower. This construction has the disadvantage that forces between the crusher device and the mower frame, which are directed perpendicularly to the direction of operative travel of the mowing machine are not absorbed. Due to these forces the connection between the crusher device and the mower frame can be damaged.

The invention has for its object to improve the above-mentioned construction. This is, according to the invention, achieved by the features in the characterizing part of claim 1. This resilient connection renders it possible to reduce to a significant extent not only the bending moments occuring in the connection, but also the forces acting in the longitudinal direction of the cutter bar. It is thus possible to have a relative simple construction in which the framework to a sufficient extent retends the possibility of observing the forces exerted in a direction opposite to the direction of operative travel. In accordance with the invention the cutter bar is constituted by a supporting beam to which one end of the resilient element is connected while the other end of the resilient element is connected to a frame part of the crusher device. The latter has the advantage that it is not necessary to provide an extra connection between the carrier frame and the cutter bar, in which a resilient element is incorporated. Preferably, the resilient element is connected to the lower end of the frame.

In a preferred embodiment there is not only provided between the cutter bar and the carrier frame at least one connection having a resilient element, but the cutter bar is also connected in at least one position to the carrier frame via the relevant outermost mowing member. In accordance with the invention the second connection is constituted by a pivot whose pivot shaft extends substantially horizontally in the direction of operative travel of the mowing machine.

The mower-crusher disclosed here can be moved by a tractor both on the side mounted and has a front mounted machine.

For a better understanding of the present invention and to show how the same may be carried into effect, reference will now be made, by way of example, to the accompanying drawings of some embodiments, in which drawings:

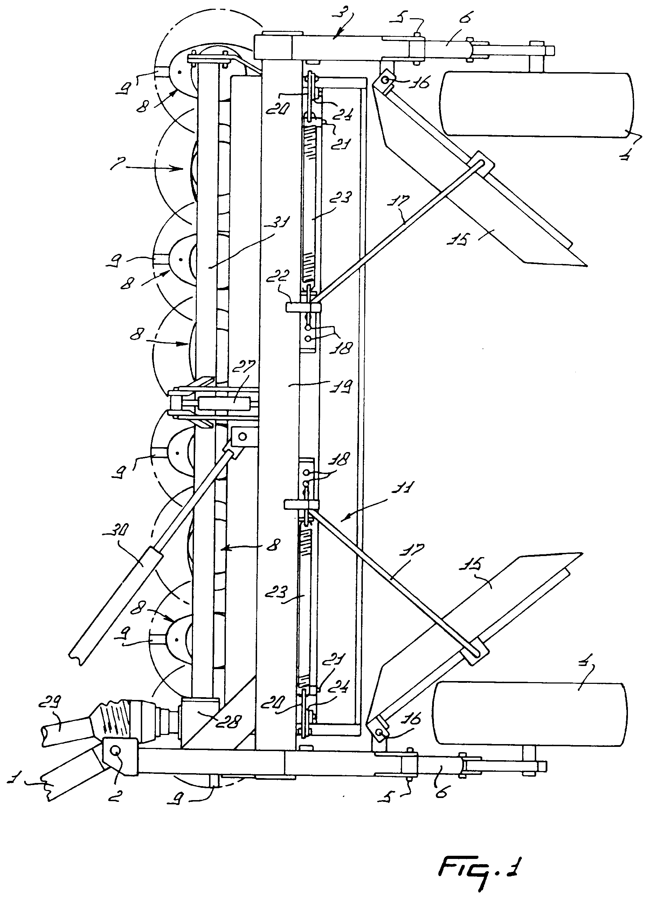

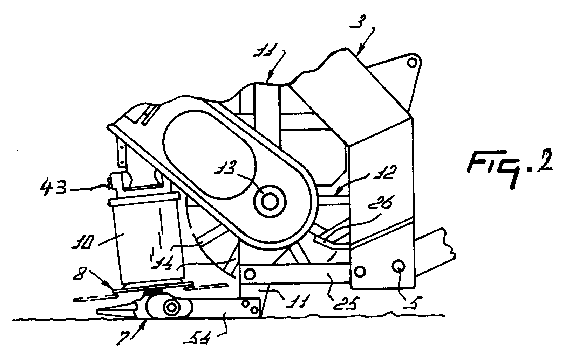

Figure 1 is a plan view of a mower-crusher according to the invention. Figure 2 is a partial side view of a mower-crusher according to the invention.

The mower-crusher, as shown in plan view (Figure 1) is provided with a pivotal arm 1, by means of which it can be connected to a tractor. Via a pivot 2 the pivotal arm 1 is connected to a first frame 3 which is supported drivably by means of wheels 4. The wheels 4 are pivotably connected to the first frame 3 by means of pivots 5. The pivotal movement of each of the wheels relative to the first frame 3 is effected by means of a hydraulic cylinder 6.

The machine furthermore includes a cutter bar, constituted by a supporting beam 7, with mowing members 8. The mowing members 8 are disc-shaped, are provided at their outer periphery with blades 9 and are capable of rotation around upwardly directed shafts. The drive of the mowing members 8 is accommodated in the supporting beam 7. The two outermost mowing members are provided with drum-shaped crop guides 10 (Figure 2) which rotate together with the said mowing members.

The mower-crusher includes a second frame 11, in which a crusher device 12 (Figure 2) is fitted. In substance, this crusher device 12 is constituted by a horizontally extending tube 13 (Figure 2), to which crusher members 14 (Figure 2) are arranged. The tube 13 together with the crusher members 14 is capable of rotating around its longitudinal axis, i.e. in such a manner that the front side moves upwardly. Consequently, the crop mown by the mowing unit is seized by the crusher members 14, which discharge the crop upwardly and rearwardly; during this upward and rearward movement the crusher members 14 advantageously process the crop.

In order to collect the crop displaced rearwardly by the crusher device 12 into a swath having a smaller width than that of the mowing machine, two swath boards 15 are arranged in the first frame 3. The swath boards 15 are arranged pivotably in the first frame 3 about vertical shafts 16 (Figure 1). The angle at which the swath board 15 is arranged can be set by connecting the rod 17 to the first frame 3 in different positions. A plurality of apertures 18 (Figure 1) are provided for the purpose. The swath boards include substantially vertical sections and sections that are folded obliquely downwardly and forwardly, so that the crop discharged rearwardly by the crusher device 12 is led towards the swath to be formed in an optimum manner.

The second frame 11 is suspended from the first frame 3 in such a manner that it is movable in the vertical direction. At the portion 19 of the first frame 3 a tilting element 20 is pivotable about a horizontal shaft 21 which extends substantially in the direction of operative travel of the mower-crusher. Between the tilting element 20 and a support 22 mounted on the portion 19 there is arranged a tension spring 23 which compensates the force exerted on the tilting element 20 by a tensile member 24. The tensile member 24, which has one end connected to the tilting element 20, has its other end connected pivotably to the second frame 11. In this manner, the lateral force exerted by the tension spring 23 is converted into an upwardly directed force on the second frame 11. The second frame 11 is furthermore movably connected to the first frame 3 by means of lower pivotal members 25 (Figure 2), which are connected pivotably to both the second frame 11 and the first frame 3. The vertically movable second frame 11 is limited in its upward movement in that the lower pivotal members abut against a stop 26. The second frame 11 is furthermore movably connected to the first frame 3 by means of an upper pivotal member 27, which also is connected pivotably to both the second frame 11 and the first frame 3. This upper pivotal member 27 is adjustable in length. By adjusting the length of the upper pivotal member, it is possible to alter the position of the second frame 11 relative to the first frame 3. For example, when the length of the upper pivotal member is reduced, then the position in which the tensile member 24 acts on the second frame 11 is slightly moved to the rear relative to the pivot shaft, by means of which the lower pivotal members 25 are connected to the second frame 11; the tensile member is then moved slightly downwards and also slightly towards the rear.

The second frame 11 accommodates a gear box 28 (Figure 1). Inside the gear box 28, the main drive shaft 29 coming from the tractor is connected both to the drive of the mower members on the cutter bar and to the drive of the crusher device.

Furthermore, in Figure 1 is shown a hydraulic cylinder 30, one end of which is connected pivotably to the pivotal arm 1 and the other end to the first frame 3. By controlling the length of the hydraulic cylinder 30, it is possible to adjust the pivotal angle of the pivotal arm 1 with respect to the mower-crusher.

In addition, it should be noted that the mower-crusher shown in Figures 1 and 2 is provided with protection screens (not shown). These protection screens consist of metal frames, across which there is arranged a plastic-coated cloth or any other type of flexible material which hangs down all around.

The mowing unit of the mower-crusher includes a cutter beam which, as has been stated in the foregoing, is constituted by the supporting beam 7, and superjacent mowing members 8, a carrier frame 31 (Figures 1 ) and two connections between the cutter bar and the carrier frame.

Figure 2 shows a partial side view of a mower-crusher, wherein the first connection between the carrier frame 31 and the supporting beam 7 extends via the crusher device of the mower-crusher, i.e. via the second frame 11 thereof. In this situation, the resilient element is constituted by a spring steel plate 54 which has one end connected to the supporting beam 7 and the other end to the lower end of the second frame 11 of the crusher device. The second connection between the carrier frame 31 and the supporting beam 7 can extend again via the relevant outermost mowing members,

## Claims

1. A mower-crusher comprising a cutter bar (7) which extends substantially transversely to the direction of operative travel over the field and mowing members (8) arranged thereabove, which cutter bar (7) is connected for its support in at least two places to a carrier frame (31), the mower-crusher furthermore comprising a crusher device (12), while a connection between the carrier frame (31) and the cutter bar (7) extends via the crusher device (12), a plate shaped resilient element (54) being arranged between the crusher device (12) and the cutter bar (7), characterized in that the plate shaped resilient element (54) is constituted by a spring steel plate which is arranged in a vertical plane in the direction of operative travel of the mower-crusher.

2. A mower-crusher as claimed in claim 1, characterized in that the cutter bar (7) is constituted by a supporting beam to which one end of the resilient element (54) is connected, while the other end of the resilient element (54) is connected to a frame (11) part of the crusher device (12).

3. A mower-crusher as claimed in claim 2, characterized in that the resilient element (54) is connected to the lower end of the frame (11).

4. A mower-crusher as claimed in any one of the claims 2 - 3, characterized in that there is a second connection between the frame (11) and the supporting beam (7) which extends via the relevant outermost mowing member (8).

5. A mower-crusher as claimed in claim 4, characterized in that the second connection is constituted by a pivot (43), whose pivot shaft extends substantially horizontally in the direction of operative travel of the mowing machine.

## Patentansprüche

1. Mäher/Konditionierer mit einem sich im wesentlichen quer zur Arbeitsrichtung erstreckenden Mähbalken (7) und über ihm angeordneten Nähgliedern (8), wobei der Mähbalken (7) zwecks Abstützung an mindestens zwei Stellen mit einem Tragrahmen (31) verbunden ist und der Mäher/Konditionierer ferner eine Quetschvorrichtung (12) aufweist, wobei sich eine Verbindung zwischen dem Tragrahmen (31) und dem Mähbalken (7) über die Quetschvorrichtung (12) erstreckt, und mit einem zwischen der Quetschvorrichtung (12) und dem Mähbalken (7) angeordneten plattenförmigen elastischen Element (54), dadurch gekennzeichnet, daß das plattenförmige elastische Element (54) durch eine Federstahlplatte gebildet ist, die in einer vertikalen, sich in Arbeitsrichtung des Mähers/Konditionierers erstreckenden Ebene angeordnet ist.

2. Mäher/Konditionierer nach Anspruch 1,
dadurch gekennzeichnet, daß der Mähbalken (7) durch einen Stützbalken gebildet ist, mit dem ein Ende des elastischen Elementes (54) verbunden ist, während das andere Ende des elastischen Elementes (54) mit einem Rahmenteil (11) der Quetschvorrichtung (12) verbunden ist.

3. Mäher/Konditionierer nach Anspruch 2,
dadurch gekennzeichnet, daß das elastische Element (54) mit dem unteren Ende des Rahmens (11) verbunden ist.

4. Mäher/Konditionierer nach einem der Ansprüche 2 bis 3,
dadurch gekennzeichnet, daß eine zweite Verbindung zwischen dem Rahmen (11) und dem Stützbalken (7) vorhanden ist, die sich über das zugehörige äußere Mähglied (8) erstreckt.

5. Mäher/Konditionierer nach Anspruch 4,
dadurch gekennzeichnet, daß die zweite Verbindung durch ein Gelenk (43) gebildet ist, dessen Achse sich im wesentlichen horizontal in Arbeitsrichtung der Mähmaschine erstreckt.

## Revendications

1. Faucheuse-broyeuse comportant une barre de coupe (7) qui s'étend sensiblement transversalement à la direction du trajet actif sur le champ et des éléments de fauchage (8) agencés au-dessus de celle-ci, laquelle barre de coupe (7) est reliée pour son support en au moins deux positions à un châssis porteur (31), la faucheuse-broyeuse comportant de plus un dispositif de broyage (12), alors qu'une connexion entre le châssis porteur (31) et la barre de coupe (7) s'étend via le dispositif broyeur (12), un élément élastique en forme de plaque (54) étant agencé entre le dispositif de broyage (12) et la barre de coupe (7), caractérisée en ce que l'élément élastique en forme de plaque (54) est constitué par une plaque d'acier à ressort qui est agencée dans un plan vertical dans la direction de déplacement actif de la faucheuse-broyeuse.

2. Faucheuse-broyeuse selon la revendication 1, caractérisée en ce que la barre de coupe (7) est constituée par une poutre de support à laquelle une première extrémité de l'élément élastique (54) est reliée, alors que l'autre extrémité de l'élément élastique (54) est reliée à une partie de châssis (11) du dispositif de broyage (12).

3. Faucheuse-broyeuse selon la revendication 2, caractérisée en ce que l'élément élastique (54) est relié à la partie inférieure du châssis (11).

4. Faucheuse-broyeuse selon la revendication 2 ou 3, caractérisée en ce qu'il existe une seconde liaison entre le châssis (11) et la poutre de support (7), qui s'étend via l'élément de fauchage le plus extérieur concerné (8).

5. Faucheuse-broyeuse selon la revendication 4, caractérisée en ce que la seconde liaison est constituée par un pivot (43), dont l'arbre de pivotement s'étend sensiblement horizontalement dans la direction du trajet actif de la machine de fauchage.
